# FASCICULE DE BREVET EUROPEEN

(11) **EP 0 752 211 B1**
(45) Date de publication et mention de la délivrance du brevet: **17.10.2001**
(21) Numéro de dépôt: 95810451.5
(22) Date de dépôt: 07.07.1995
(51) Int. Cl.: A23J 3/08, A23L 1/0524, A23L 1/0532, A23L 1/054, A23L 1/187

(54) **Gel de protéines de lactoserum et polysaccharide obtenu par traitement haute pressions**
Molkeprotein/polysaccharide Gel, hergestellt durch Hochdruckbehandlung
Whey-protein/polysaccharide gel attained by high-pressure treatment

(43) Date de publication de la demande: 08.01.1997
(73) Titulaire: SOCIETE DES PRODUITS NESTLE S.A., 1800 Vevey (CH)
(72) Inventeur: Raemy, Alois, CH-1814 La Tour-de-Peilz (CH); Fernandes, Paulo, F-80000 Amiens (FR)
(74) Mandataire: Wavre, Claude-Alain

(56) Documents cités:
- EP-A- 0 340 035
- EP-A- 0 519 104
- US-A- 4 362 761
- US-A- 5 232 722
- PATENT ABSTRACTS OF JAPAN vol. 012 no. 398,21 Octobre 1988 & JP-A-63 141566 (SNOW BRAND MILK) 14 Juin 1988,
- PATENT ABSTRACTS OF JAPAN vol. 018 no. 182,29 Mars 1994 & JP-A-53 039299 (TAIYO KAGAKU) 21 Décembre 1993,
- DATABASE WPI Week 9417 Derwent Publications Ltd., London, GB; AN 94-140515 & JP-A-06 086 646 (M.WATANABE) , 29 Mars 1994
- K.KULP, R.LOEWE: "BATTERS AND BREADINGS", 1990, AACC, USA

## Description

La présente invention a pour objet un procédé de préparation d'un gel contenant au moins un polysaccharide et des protéines de lactosérum.

On connaît diverses applications de la technologie des hautes pressions hydrostatiques pour le traitement de produits alimentaires.

EP-A-0429966 (KK MEIDI-YA SHOKUHIN KOJO), par exemple, décrit l'application d'un traitement haute pression hydrostatique à des produits à base de fruits tels que des marmelades, gelées, compotes ou purées, dans le but d'assurer la conservation de la couleur et du goût des fruits entrant dans leur composition sans avoir à les soumettre à un traitement à la chaleur.

FR-A-2703566 (OVI S.A. et SOCIETE FALIERE FOIES GRAS) décrit un procédé de traitement de foie gras par haute pression hydrostatique à froid, pour éviter la fonte lipidique que provoquerait un traitement thermique traditionnel, en vue de sa conservation.

La demande de brevet européen No 94102349.1 décrit un procédé de fabrication de produits de charcuterie tels que des saucisses de Vienne à faible teneur en matière grasse qui comprend un traitement intermédiaire à haute pression hydrostatique.

US-A-5291877 décrit un procédé de fabrication d'un gel alimentaire, dans lequel on prépare un mélange aqueux contenant tous les ingrédients devant entrer dans la composition du gel, dont un émulsifiant en dispersion et un amidon riche en amylose gélatinisée dans des conditions permettant de libérer une quantité adéquate d'amylose, on complexe à chaud cette amylose avec l'émulsifiant, et l'on fait prendre le mélange par refroidissement.

US5232722 décrit un procédé de préparation de dispersions aqueuses ou gels de complexes ioniques microfragmentés de polysaccharides et de protéine, la prise en gel étant assurée par élévation de la température et refroidissement.

JP53039299 décrit la préparation de complexes protéine-polysaccharide ayant des propriétés émulsifiantes, ces complexes étant liés par une réaction aminocarbonyle provoquée par un traitement haute pression hydrostatique.

JP60086646 (abrégé WPI) décrit la préparation d'un gel alimentaire par traitement haute pression hydrostatique d'une solution relativement concentrée de protéines lactiques.

JP 63 141566 (abrégé PAJ) décrit un gel de protéine de lactosérum et de polysaccharide (eg xanthane).

La présente invention a pour but de proposer un procédé permettant de préparer un gel alimentaire présentant une élasticité et une viscosité adéquates sans devoir recourir à une étape de chauffage à une température relativement élevée, ainsi que le gel obtenu par ce procédé.

C'est ainsi que, dans le procédé de préparation d'un gel selon la présente invention, on prépare un sol contenant tous les ingrédients devant entrer dans la composition du gel, dont 0,05-0,25 % en poids d'au moins un polysaccharide choisi parmi le kappa-carragénane, le xanthan et/ou la pectine, et 5-15% en poids de protéines de lactosérum, et l'on fait prendre le sol en le soumettant à une pression hydrostatique de 200-800 MPa durant 1-20 min à 5-75°C.

Un gel selon la présente invention présente un module conservatif G' de 2-10⁵ Pa ainsi qu'un module dissipatif G'' de 1-10⁴ Pa.

On a constaté que, de manière surprenante, il était possible de faire prendre en gel un sol contenant au moins un polysaccharide, notamment le kappa-carragénane, et des protéines de lactosérum en le soumettant à un traitement à haute pression hydrostatique, alors que l'effet d'un tel traitement sur un gel contenant un polysaccharide tel que le kappa-carragénane, par exemple, est connu pour être négatif.

On sait en effet par K. Gekko et K. Kasuya, Int. J. Biol. Macromol. 7, 299 (1985) qu'un traitement à haute pression hydrostatique provoque un abaissement du point de fusion d'un gel de kappa-carragénane proportionnel à la pression appliquée.

On a constaté en outre que le présent procédé permet de préparer un gel présentant une élasticité et une viscosité variables dans des plages étendues, en fonction de la concentration du sol en polysaccharide et en protéines, de la pression appliquée et de la température durant le traitement. On a constaté que, d'une manière générale, plus ces différentes variables prennent des valeurs élevées, plus la fermeté du gel est élevée.

Dans le présent exposé, la fermeté des gels est donc définie par l'intermédiaire des paramètres "module conservatif" G', caractérisant l'élasticité, et "module dissipatif" G'', caractérisant la viscosité. Ces paramètres sont déterminés en régime harmonique. L'échantillon est soumis à une sollicitation ou déformation sinusoïdale à une fréquence déterminée. On mesure la contrainte de cisaillement correspondante, elle-même sinusoïdale mais présentant un décalage de phase compris entre les extrêmes zéro (texture purement élastique) et π/2 (texture purement visqueuse). Un décalage de phase intermédiaire présente une composante élastique, à savoir le module conservatif G', et une composante visqueuse, à savoir le module dissipatif G".

Dans le présent exposé, on parle d'un gel fort lorsque ses modules conservatif G' et dissipatif G'' sont situés dans le haut des domaines respectifs définis ci-dessus, notamment lorsque G' prend une valeur de 100-10⁵ Pa et que G'' prend une valeur de 10-10⁴ Pa. De même, on parle d'un gel faible lorsque ses modules prennent des valeurs comprises entre 2 et moins de 100 Pa pour G' et entre 1 et moins de 10 Pa pour G''.

Un gel fort peut présenter une teneur en protéines de lactosérum de environ 12-15% en poids et une teneur en polysaccharide de environ 0,1-0,25% en poids, par exemple.

Un gel faible peut présenter une teneur en protéines de lactosérum de environ 5-12% en poids et une teneur en polysaccharide de environ 0,05-0,1% en poids, par exemple.

Les protéines de lactosérum, en particulier d'un lactosérum sous-produit d'une fabrication de fromage de lait de vache, peuvent être plus ou moins pures selon la manière dont elles ont été récupérées ou isolées du lactosérum, notamment par précipitation, filtration, ultrafiltration et/ou diafiltration, par exemple. De préférence, elles présentent une pureté d'au moins 50%.

Le polysaccharide est choisi parmi le kappa-carragénane, le xanthane et/ou la pectine. On a constaté que la fermeté du gel peut varier plus ou moins en fonction du choix du polysaccharide, selon la température à laquelle on réalise le traitement à haute pression hydrostatique.

Dans une forme de réalisation préférée de la présente invention, le gel peut notamment contenir, en plus des protéines de lactosérum et du polysaccharide, des ingrédients traditionnels dans la préparation soit de desserts du type flan ou pudding, soit de gelées du type aspic ou de succédanés de la viande, tels que d'autres matières solides du lait, jusqu'à 10% en poids de saccharose, des extraits de viande, des bases pour bouillon, et/ou des substances aromatisantes et/ou colorantes, par exemple.

Pour mettre en oeuvre le procédé selon la présente invention, on prépare donc un sol contenant tous les ingrédients devant entrer dans la composition du gel, à savoir au moins un polysaccharide, des protéines de lactosérum, et d'autres ingrédients complémentaires éventuels, tels que ceux cités ci-dessus pour une forme de réalisation particulière du type pudding, par exemple.

Pour préparer ledit sol, on peut mettre en solution aqueuse simultanément ou séparément le polysaccharide, les protéines de lactosérum et les éventuels ingrédients facultatifs, et agiter la solution, par exemple.

Le pH de la solution avant agitation est de préférence neutre, autrement dit de 6,0-7,5, par exemple.

Pour réaliser le traitement à haute pression hydrostatique, on peut conditionner le sol dans des sachets ou des . gobelets en plastique, notamment dans des pots de yogourt scellés avec des feuilles d'aluminium, par exemple, avant de les placer dans l'enceinte de traitement d'un appareil du commerce où elles seront soumises à la haute pression hydrostatique, à la température et durant le temps désirés.

On soumet le sol à une pression hydrostatique de 200-800 MPa à une température de 5-75°C durant 1-20 min, par exemple.

Pour obtenir un gel fort, on soumet de préférence le sol à une pression hydrostatique de 400-800 MPa à une température de 50-75°C.

Pour obtenir un gel faible, on soumet de préférence le sol à une pression hydrostatique de 200 MPa à moins de 400 MPa à une température de 5°C à moins de 50°C.

Les exemples ci-après sont présentés à titre d'illustration du gel et de son procédé de préparation selon la présente invention. Les pourcentages et parties y sont donnés en poids sauf indication contraire.

Dans ces exemples, l'appareil utilisé pour soumettre les différents sols à une haute pression hydrostatique est une presse National Forge Europe (Belgique) pour des pressions comprises entre 200 et moins de 400 MPa et une presse ABB à volume utile de 1,4 l pour des pressions comprises entre 400 et 800 MPa.

Les protéines de lactosérum sont un isolat présentant une pureté de 90% commercialisé par la maison Le Seur Isolates (GB). Le kappa-carragénane est un produit commercialisé par la maison Fluka (CH). Le xanthane est un produit commercialisé par la maison Xanthan Jungbunzlauer (DE). La pectine est un produit extrait du citron, commercialisé sous la désignation HM-pectin par la maison Fluka (CH).

Pour préparer le sol, on met les protéines en solution dans l'eau distillée à température ambiante et l'on ajuste le pH à 7,0 par addition de HCl 0,1 M ou KOH 0,1 M. On met les polysaccharides en solution en les dispersant dans l'eau à température ambiante en remuant doucement pendant 1 h, puis en chauffant à 90°C durant 30 min sous agitation. On mélange dans les proportions désirées la solution de protéines avec la solution de polysaccharide à température ambiante sous agitation pendant 30 min. On ajuste encore, le cas échéant, le pH à 7,0.

On détermine les modules conservatif G' et dissipatif G'' à l'aide d'un rhéomètre à tension constante (Carri-Med CS-100) utilisant un dispositif de mesure formé d'un cône tournant sur une plaque, cône et plaque ayant un diamètre de 6 cm et l'angle entre cône et plaque étant de 4°. Les mesures sont faites à 25°C, à plusieurs fréquences d'oscillation du cône autour de son axe choisies dans l'intervalle de 0,1-10 Hz, sous un couple de 0,01 Nm d'amplitude, une valeur sélectionnée dans un domaine de viscosité linéaire.

### Exemple 1

On prépare un sol contenant 12% de protéines de lactosérum et 0,1% de kappa-carragénane. On divise ce sol en plusieurs aliquots que l'on soumet à différentes pressions hydrostatiques comprises entre 200 et moins de 400 MPa, durant différents laps de temps compris entre 6 et 12 min, et à température ambiante.

Les conditions de ces essais ainsi que les résultats des mesures de la fermeté (élasticité et viscosité définies par les modules conservatif G' et dissipatif G'') des gels obtenus sont réunies dans le tableau 1 ci-après dans lequel on a aussi indiqué, pour comparaison, les valeurs de G' et G'' du sol non pressurisé:

**Tableau 1**

| essai No | durée (min) | pression (MPa) | G *'* (Pa) | G *''* (Pa) |
|---|---|---|---|---|
| compar | 0 | 0 | 5 | 3,0 |
| 1.01 | 6 | 200 | 18 | 3,0 |
| 1.02 | 6 | 250 | 27 | 2,8 |
| 1.03 | 6 | 300 | 17 | 5,0 |
| 1.04 | 6 | 350 | 19 | 3,3 |
| 1.05 | 6 | 380 | 25 | 3,2 |
| 1.06 | 9 | 200 | 18 | 4,5 |
| 1.07 | 9 | 250 | 23 | 5,5 |
| 1.08 | 9 | 300 | 17 | 5,0 |
| 1.09 | 9 | 350 | 26 | 4,0 |
| 1.10 | 9 | 380 | 27 | 3,8 |
| 1.11 | 12 | 200 | 18 | 2,0 |
| 1.12 | 12 | 250 | 24 | 5,0 |
| 1.13 | 12 | 300 | 25 | 5,2 |
| 1.14 | 12 | 350 | 27 | 3,0 |
| 1.15 | 12 | 380 | 26 | 3,2 |

On voit sur ce tableau que le module conservatif G' du gel faible obtenu par traitement haute pression à température ambiante de ce sol contenant 12% de protéines de lactosérum et 0,1% de kappa-carragénane présente une valeur généralement croissante avec la pression entre 200 et 380 MPa, alors que le module dissipatif G'' présente une valeur optimale à des pressions comprises entre 250 et 350 MPa. Ce comportement se retrouve très semblable quelle que soit la durée précise du traitement dans ce domaine de 6-12 min.

La délicatesse de la texture de ces gels les prédestine à une utilisation dans la préparation de desserts du type flan ou pudding, par exemple.

### Exemples 2-4

On prépare trois sols contenant chacun 12% de protéines de lactosérum et 0,1% de l'un des trois polysaccharides kappa-carragénane, xanthane et pectine. On divise ces sols en plusieurs aliquots que l'on soumet à différentes pressions hydrostatiques comprises entre 400 et 800 MPa, durant 10 min à 50°C.

Les conditions de ces essais ainsi que les résultats des mesures de la fermeté (élasticité et viscosité définies par les modules conservatif G' et dissipatif G'') des gels obtenus sont réunies dans le tableau 2 ci-après:

**Tableau 2**

| essai No | polysaccharide | pression (MPa) | G*'* (Pa) | G*''* (Pa) |
|---|---|---|---|---|
| 2.1 | kappa-carragénane | 400 | 100 | 20 |
| 2.2 | kappa-carragénane | 600 | 250 | 60 |
| 2.3 | kappa-carragénane | 800 | 470 | 110 |
| 3.1 | xanthane | 600 | 150 | 35 |
| 3.2 | xanthane | 800 | 300 | 65 |
| 4.1 | pectine | 600 | 250 | 40 |
| 4.2 | pectine | 800 | 300 | 50 |

On voit sur ce tableau que les modules conservatifs G' et dissipatifs G'' des gels forts obtenus par traitement haute pression à 50°C durant 10 min de ces sols contenant 12% de protéines de lactosérum et 0,1% de kappa-carragénane, de xanthane ou de pectine présentent une valeur généralement croissante avec la pression entre 400 et 800 MPa.

La fermeté remarquable de ces gels les prédestine à une utilisation dans la préparation d'aspics ou de succédanés de la viande, par exemple.

### Exemple 5

On prépare un sol contenant les ingrédients suivants dans les proportions indiquées en %:

| | |
|---|---|
| protéine de lactosérum | 12,0 |
| kappa-carragénane | 0,1 |
| saccharose | 6,0 |
| saccharose vanillé | 2,0 |
| poudre de cacao | 4,0 |
| lait écrémé en poudre | 3,0 |
| eau: différence à 100 | |

On soumet ce sol à une pression de 250 MPa durant 9 min à température ambiante. On obtient ainsi un flan ou pudding au chocolat présentant un module consevatif G' de 35 Pa et un module dissipatif G'' de 8 Pa. Il se distingue par une texture en bouche agréable, à savoir à la fois lisse, onctueuse et croquante.

### Exemple 6

On prépare un sol contenant les ingrédients suivants dans les proportions indiquées en %:

| | |
|---|---|
| protéine de lactosérum | 12,0 |
| pectine | 0,1 |
| extrait de viande | 3,0 |
| sel | 2,0 |
| eau: différence à 100 | |

On soumet ce sol à une pression de 800 MPa durant 10 min à 50°C. On obtient ainsi un succédané de viande présentant un module conservatif G' de 250 Pa et un module dissipatif G'' de 60 Pa. Il se distingue par une texture en bouche ferme et croquante particulièrement appréciable sous forme subdivisée.

## Revendications

1. Procédé de préparation d'un gel contenant au moins un polysaccharide et des protéines de lactosérum, dans lequel on prépare un sol comprenant tous les ingrédients devant entrer dans la composition du gel, dont 0,05-0,25% en poids d'au moins un polysaccharide choisi parmi le kappa-carragénane, le xanthane et/ou la pectine et 5-15% en poids de protéines de lactosérum et l'on fait prendre le sol en le soumettant à une pression hydrostatique de 200-800 MPa durant 1-20 min. à 5-75°C .

2. Procédé selon la revendication 1, dans lequel, pour préparer le sol, on met en solution aqueuse simultanément ou séparément le polysaccharide, les protéines de lactosérum et les éventuels ingrédients facultatifs, et l'on agite la solution.

3. Procédé selon la revendication 1, dans lequel ladite solution présente un pH de 6,0-7,5.

4. Gel obtenu par le procédé selon l'une des revendications 1-3, présentant un module conservatif G' de 2-10⁵ Pa ainsi qu'un module dissipatif G'' de 1-10⁴ Pa.

5. Gel selon la revendication 4, contenant en outre des additifs comprenant d'autres matières sèches du lait, jusqu'à 10% en poids de saccharose, et/ou des substances aromatisantes et/ou colorantes.

## Patentansprüche

1. Verfahren zur Herstellung eines mindestens ein Polysaccharid und Molkeproteine enthaltenden Gels, bei dem man ein Sol herstellt, das alle Bestandteile enthält, die in der Zusammensetzung des Gels auftreten sollen, darunter 0,05-0,25 Gew.-% mindestens eines Polysaccharids, das aus κ-Carrageenan, Xanthan und/oder Pectin ausgewählt ist, und 5-15 Gew.-% Molkeproteine, und das Sol koagulieren lässt, indem man es 1-20 min bei 5-75 °C einem hydrostatischen Druck von 200-800 MPa aussetzt.

2. Verfahren nach Anspruch 1, bei dem man zur Herstellung des Sols gleichzeitig oder getrennt das Polysaccharid, die Molkeproteine und die ggf. vorgesehenen fakultativen Bestandteile in wässrige Lösung bringt und die Lösung rührt.

3. Verfahren nach Anspruch 1, bei dem die Lösung ein pH von 6,0-7,5 aufweist.

4. In dem Verfahren nach einem der Ansprüche 1 bis 3 erhaltenes Gel mit einem Speichermodul G' von 2-10⁵ Pa und einem Verlustmodul G'' von 1-10⁴ Pa.

5. Gel nach Anspruch 4, das außerdem Zusätze enthält, die andere Trockensubstanzen der Milch, bis zu 10 Gew.-% Saccharose und oder aromatisierende Substanzen und/oder Farbstoffe umfassen.

## Claims

1. Method for preparing a gel containing at least one polysaccharide and whey proteins, wherein a sol is prepared comprising all the ingredients which are to enter into the composition of the gel, 0.05-0.25 % by weight being at least one polysaccharide chosen from kappa-carrageenin, xanthan and/or pectin, and 5-15 % by weight being whey proteins, and the sol is made to set by subjecting it to a hydrostatic pressure of 200-800 MPa for 1-20 min. at 5-75°C.

2. Method according to claim 1 wherein, in order to prepare the sol, the polysaccharide, the whey proteins and any optional ingredients are put into aqueous solution simultaneously or separately and the solution is stirred.

3. Method according to claim 1, wherein the said solution has a pH of 6.0-7.5.

4. Gel obtained by the method according to one of claims 1-3, having a conservative modulus G' of 2-10⁵ Pa as well as a dissipative modulus G'' of 1-10⁴ Pa.

5. Gel according to claim 4, additionally containing additives comprising other dried milk materials, up to 10 % by weight of sucrose and/or flavouring and/or colouring substances.
